# EUROPÄISCHE PATENTSCHRIFT

(11) **EP 3 485 591 B1**
(45) Veröffentlichungstag und Bekanntmachung des Hinweises auf die Patenterteilung: **06.04.2022**
(21) Anmeldenummer: 17737782.7
(22) Anmeldetag: 10.07.2017
(51) Int. Cl.: H04L 1/18

(54) **RÜCKMELDEKANAL ZUR SICHEREN DATENÜBERTRAGUNG**
FEEDBACK CHANNEL FOR SECURE DATA TRANSMISSION
CANAL D'ACCUSÉ DE RÉCEPTION POUR LA TRANSMISSION DE DONNÉES SÉCURISÉE

(30) Priorität: 16.07.2016 DE 102016008708
(43) Veröffentlichungstag der Anmeldung: 22.05.2019
(73) Patentinhaber: Audi AG, 85045 Ingolstadt (DE)
(72) Erfinder: SPEHL, Jürgen, 85139 Wettstetten (DE)
(86) Internationale Anmeldenummer: PCT/EP2017/067205
(87) Internationale Veröffentlichungsnummer: WO 2018/015186

(56) Entgegenhaltungen:
- WO-A1-2016/108553
- QUALCOMM INCORPORATED: "V2X Communication in 3GPP", 3GPP DRAFT; S1-144374 V2X COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. SA WG1, Nr. San Francisco, USA; 20141117 - 20141121 5. November 2014 (2014-11-05), XP050890774, Gefunden im Internet: URL:http://www.3gpp.org/ftp/tsg_sa/WG1_Ser v/TSGS1_68_SanFrancisco/docs/ [gefunden am 2014-11-05]

## Beschreibung

Die vorliegende Erfindung betrifft ein Verfahren zum Übertragen mindestens eines Datenpakets und eine Kommunikationsanordnung.

Beim Übertragen von Daten zwischen verschiedenen Kommunikationsteilnehmern kann es zu Problemen, wie bspw. einem Abbruch einer Verbindung zwischen den Kommunikationseilnehmern kommen. Da traditionellerweise jeweilige zu übertragende Daten unabhängig von einer Rückmeldung durch einen Empfänger versendet werden, kann es vorkommen, dass Daten nicht vollständig übertragen werden und bspw. ein Steuerbefehlssatz nur unvollständig beim Empfänger ankommt, ohne dass ein jeweiliger Sender von der unvollständigen Übertragung Kenntnis erlangt und ggf. fälschlicherweise von einer erfolgreichen Übertragung und damit verbundenen Konfigurationsänderungen beim Empfänger ausgeht. Die deutsche Druckschrift DE 10 2012 011 994 A1 offenbart ein Verfahren zum Informationsaustausch zwischen Fahrzeugen mittels eines temporär etablierten Funknetzwerks auf Grundlage bspw. eines WLAN-Standards.

In der deutschen Druckschrift DE 10 2011 076 638 A1 wird ein Verfahren zum Austausch von Fahrzeugdiagnosedaten zwischen einem Fahrzeug und einem Benutzerkommunikationsgerät offenbart.

Ein Verfahren zur anonymen Kommunikation zwischen Fahrzeugen ist in der britischen Druckschritt GB 2 427 787 A offenbart.

In der Druckschrift WO2016/l08553 A1 wird, im Kontext von V2H, Vehicle To Home, Kommunikation, eine Methode zum Informationsaustausch über einen Seitenkanal offenbart.

Vor diesem Hintergrund wird ein Verfahren zum Übertragen mindestens eines Datenpakets zwischen einem ersten Kommunikationsteilnehmer einer Kommunikationsanordnung und mindestens einem zweiten Kommunikationsteilnehmer der Kommunikationsanordnung vorgestellt, bei dem das mindestens eine Datenpaket von dem ersten Kommunikationsteilnehmer zu dem mindestens einen zweiten Kommunikationsteilnehmer zumindest teilweise über eine zwischen einem Kommunikationsmodul des ersten Kommunikationsteilnehmers und einem Kommunikationsmodul des mindestens einen zweiten

Kommunikationsteilnehmers aufgebaute bidirektionale Direktverbindung übertragen wird, wobei der erste Kommunikationsteilnehmer und/oder der mindestens eine zweite Kommunikationsteilnehmer ein Fahrzeug ist, und bei dem der mindestens eine zweite Kommunikationsteilnehmer einen Empfang jeweiliger Daten des mindestens einen Datenpakets an den ersten Kommunikationsteilnehmer rückmeldet.

Ausgestaltungen ergeben sich aus der Beschreibung und den abhängigen Ansprüchen.

Das vorgestellte Verfahren dient insbesondere zur sicheren, d. h. einer insbesondere vollständigen Übertragung von Daten eines Datenpakets zwischen jeweiligen Kommunikationsteilnehmern einer Kommunikationsanordnung, die mindestens ein Fahrzeug umfasst. Dazu ist vorgesehen, dass zwischen den jeweiligen Kommunikationsteilnehmern, d. h. insbesondere einem Sender und einem Empfänger, eine bidirektionale Direktverbindung aufgebaut wird, über die insbesondere Informationen über eine Übertragung jeweiliger zu übertragender Daten eines Datenpakets auszutauschen sind. Dies bedeutet, dass über die bidirektionale Direktverbindung eine Rückmeldung an einen Sender durch einen Empfänger derart bereitgestellt werden kann, dass der Sender Kenntnis über einen Ablauf der Übertragung jeweiliger Daten eines Datenpakets erlangt. Entsprechend kann der Empfänger dem Sender mitteilen bzw. rückmelden, dass jeweilige Daten eines Datenpakets vollständig empfangen wurden, so dass der Sender eine erfolgreiche bzw. vollständige Übertragung bestätigen bzw. protokollieren und ggf. weiterführende Datenpakete an den Empfänger übertragen kann. Dabei können auch jeweilige zu übertragende Daten eines Datenpakets über die erfindungsgemäß vorgesehene Direktverbindung übertragen werden.

Unter einem Sender ist im Kontext der vorgestellten Erfindung ein Kommunikationsteilnehmer einer Kommunikationsanordnung zu verstehen, der ein jeweiliges Datenpaket an mindestens einen zweiten Kommunikationsteilnehmer zumindest teilweise über die erfindungsgemäß vorgesehene bidirektionale Direktverbindung, d. h. insbesondere eine zwischen 5G-Modulen eingerichtete Kommunikationsverbindung, an einen Empfänger übermittelt.

Es ist insbesondere vorgesehen, dass falls ein Datenpaket nicht vollständig übermittelt wurde, ein jeweiliger Empfänger einem jeweiligen Sender eine Rückmeldung darüber bereitstellt. Der Empfänger fordert die nicht übermittelten Daten von dem Sender neu an. Durch die erfindungsgemäß vorgesehene Rückmeldung ist es dem Sender möglich, den Empfänger so lange mit Daten zu versorgen, bis dieser alle zu übermittelnden Daten eines zu übermittelnden Datenpakets empfangen hat. Dazu kann der Sender bspw. wiederholt eine Datenverbindung zur Übertragung der zu übermittelnden Datenpakete zu dem Empfänger aufbauen.

Mittels des vorgestellten Verfahrens ist es möglich, eine erfolgreiche Übertragung, d. h. eine vollständige Übertragung aller Daten eines zu übertragenden Datenpakets, zu erfassen und zu protokollieren. Entsprechend kann ein Sender nach dem Empfang einer entsprechenden Rückmeldung durch einen jeweiligen Empfänger mit Sicherheit bestätigen, dass die Daten übertragen und von dem Empfänger empfangen und ggf., dass die Daten an dem Empfänger eingestellt wurden.

Insbesondere bei der Übermittlung sicherheitsrelevanter Daten, wie bspw. Daten für prädiktive fahrdynamische Interaktionen zur vollautonomen Steuerung eines Fahrzeugs in einem Konvoi, wie bspw. Fahrbefehle zum Bremsen, Beschleunigen oder Ausscheren, ist eine Bestätigung über eine Übertragung von Steuerbefehlen von größter Relevanz für eine Sicherheit von Mensch und Maschine. Entsprechend werden Situationen, in denen ein Sender fälschlicherweise von einem bei einem Empfänger eingestellten Steuerbefehl ausgeht, durch das vorgestellte Verfahren vermieden. Dabei können mittels der erfindungsgemäß vorgesehenen bidirektionalen Direktverbindung bspw. Berechtigungsprofile eingerichtet werden, die einem Sender ermöglichen, Steuerbefehle an einen Empfänger zu übertragen.

Es ist denkbar, dass als Sender zum Übertragen von bspw. Daten für prädiktive fahrdynamische Interaktionen zur vollautonomen Steuerung eines Fahrzeugs eine Infrastrukturbake eines Straßennetzbetreibers gewählt wird.

Weiterhin ist es denkbar, dass als bidirektionale Direktverbindung eine Schmalbandkommunikation über ein sogenanntes "narrow band" gewählt wird.

Unter Verwendung des vorgestellten Verfahrens ist es möglich, Daten, insbesondere große Mengen an Daten, in Echtzeit mit entsprechend geringer Latenz von wenigen Millisekunden direkt zwischen Fahrzeugen und/oder Kommunikationsteilnehmern, wie bspw. Elementen einer Infrastruktur, auszutauschen. Dazu ist vorgesehen, dass zwischen jeweiligen Kommunikationsteilnehmern ein bidirektionales Kommunikationsprotokoll implementiert wird, mittels dessen ein Empfang jeweiliger Datenpakete über eine entsprechende bidirektionale Direktverbindung bzw. einen sogenannten "Feedback-Kanal" an einen jeweiligen sendenden Kommunikationsteilnehmer rückgemeldet wird. Dies bedeutet, dass über die bidirektionale Direktverbindung eine Regelschleife implementiert wird, mittels derer eine Datenübertragung zu regeln und zu kontrollieren ist.

In einer möglichen Ausgestaltung des vorgestellten Verfahrens ist vorgesehen, dass der mindestens eine zweite Kommunikationsteilnehmer, d. h. der Empfänger, ausschließlich dann einen Empfang jeweiliger Daten des mindestens einen Datenpakets über die bidirektionale Direktverbindung an den ersten Kommunikationsteilnehmer, d. h. den Sender, rückmeldet, wenn alle Daten des mindestens einen Datenpakets empfangen wurden, und bei dem der erste Kommunikationsteilnehmer das mindestens eine Datenpaket erneut an den mindestens einen zweiten Kommunikationsteilnehmer überträgt oder eine Fehlermeldung erzeugt, wenn die Rückmeldung des mindestens einen zweiten Kommunikationsteilnehmers nicht innerhalb eines vorgegebenen Zeitfensters erfolgt.

Um eine erfolgreiche Übertragung eines ersten Datenpakets an einen jeweiligen Sender rückzumelden und, dadurch bedingt, dem Sender eine weiterführende Kommunikation von bspw. einem auf dem ersten Datenpaket aufbauenden Steuerbefehl zu ermöglichen, ist vorgesehen, dass der Empfänger dann eine erfolgreiche Übertragung an den Sender rückmeldet, wenn alle Daten des ersten Datenpakets empfangen wurden. Dazu kann zu Beginn der Übertragung des ersten Datenpakets eine Information über bspw. eine Größe oder jede weitere technisch geeignete Eigenschaft zum Beurteilen einer Vollständigkeit eines Datenpakets von dem Sender an den Empfänger über die bidirektionale Direktverbindung übermittelt werden, anhand dessen der Empfänger die Vollständigkeit des ersten Datenpakets ermitteln kann.

Sollte der Empfänger feststellen, dass ein Datenpaket nicht vollständig übertragen wurde, d.h. bspw. innerhalb eines vorgegebenen Zeitfensters nicht vollständig übertragen wurde, kann vorgesehen sein, dass der Empfänger an den Sender eine Rückmeldung über eine fehlerhafte Übertragung übermittelt, so dass der Sender entweder eine fehlgeschlagene Übertragung protokolliert und entsprechend eine weiterführende Kommunikation vermeidet oder die ursprüngliche Datenübermittlung erneut startet.

Selbstverständlich kann auch vorgesehen sein, dass ein jeweiliger Empfänger einem jeweiligen Sender erst dann eine Rückmeldung über eine erfolgreiche Übertragung übermittelt, wenn jeweilige Daten bzw. entsprechende Steuerbefehle an dem Empfänger eingestellt wurden. Insbesondere bei Steuerbefehlen zum Steuern bspw. eines Fahrzeugs, kann der Sender mittels eines Wissens über aktuell eingestellte Steuerbefehle eine weiterführende Kommunikation mit dem Empfänger führen und den Empfänger mittels komplexer Abfolgen von Steuerbefehlen, die aufeinander aufbauen, steuern.

In einer weiteren möglichen Ausgestaltung des vorgestellten Verfahrens ist vorgesehen, dass ein Teil des Datenpakets über eine jeweilige zwischen jeweiligen Kommunikationsteilnehmern gebildete bidirektionale Direktverbindung und ein weiterer Teil des Datenpakets über ein Mobilfunknetzwerk übertragen wird.

Durch eine Aufteilung von Daten eines jeweiligen zu übertragenden Datenpakets kann eine gegenüber einer Übertragung über lediglich einen Kommunikationskanal schnellere und zuverlässigere Übertragung erreicht werden. Dabei kann bspw. als weiterer Kommunikationskanal eine LTE-Verbindung eines Mobilfunknetzwerks gewählt werden.

Dabei ist vorgesehen, dass ein Übertragungsprotokoll über die bidirektionale Direktverbindung und ein jeweilige zu übertragende Informationen umfassender Teil des Datenpakets über das Mobilfunknetzwerk übertragen wird.

In einer weiteren möglichen Ausgestaltung des vorgestellten Verfahrens ist vorgesehen, dass der erste Kommunikationsteilnehmer und der mindestens eine zweite Kommunikationsteilnehmer ein Transferprotokoll über jeweilige übertragene Daten, die bspw. über die bidirektionale Direktverbindung oder eine weitere Datenverbindung übertragen wurden, über die bidirektionale Direktverbindung austauschen.

Mittels eines Transferprotokolls, das bspw. Informationen zu einer Größe oder jedem weiteren technisch geeigneten Parameter zur Beurteilung einer Vollständigkeit eines jeweiligen Datenpakets umfasst, kann wechselseitig, d. h. sowohl seitens eines Senders als auch seitens eines Empfängers, ein Ablauf einer Übertragung des Datenpakets überprüft bzw. protokolliert werden. Dazu können jeweilige empfangene Daten mit in dem Transferprotokoll angegebenen Daten abgeglichen und bspw. auf deren Vollständigkeit hin überprüft werden.

In einer weiteren möglichen Ausgestaltung des vorgestellten Verfahrens ist vorgesehen, dass für eine Vielzahl zweiter Kommunikationsteilnehmer jeweils eine bidirektionale Direktverbindung zwischen dem ersten Kommunikationsteilnehmer und einem jeweiligen zweiten Kommunikationsteilnehmer zur Übertragung einer jeweiligen Rückmeldung verwendet wird.

Um bei einer komplexen Kommunikationsanordnung mit mehreren Empfängern eine Überlagerung jeweiliger Informationen zu jeweiligen Rückmeldungen zu vermeiden und eine Datensicherheit einer Kommunikation zwischen dem Sender und einem jeweiligen Empfänger zu gewährleisten, ist vorgesehen, dass der Sender mit jedem Empfänger unter Verwendung jeweiliger 5G-Module eine individuelle bidirektionale Direktverbindung aufbaut.

Unter einem 5G-Modul ist im Kontext der vorliegenden Erfindung ein Kommunikationsmodul zu verstehen, das einen 5G-Standard erfüllt und, dadurch bedingt, dazu konfiguriert ist, bei Bedarf eine bidirektionale Direktverbindung zu einem weiteren 5G-Modul über einen zu einer Verbindung zu einem Mobilfunknetzwerk zusätzlichen Seitenkanal herzustellen. Dabei wird die bidirektionale Direktverbindung ausschließlich durch jeweilige miteinander kommunizierende 5G-Module verwaltet.

Insbesondere ist gemäß dem vorgestellten Verfahren vorgesehen, dass jeweilige 5G-Module für eine Kommunikation zwischen verschiedenen Fahrzeugen verwendet werden, ohne dass ein Mobilfunknetzwerk zwischengeschaltet wird.

In einer weiteren möglichen Ausgestaltung des vorgestellten Verfahrens ist vorgesehen, dass eine Kommunikation des ersten Kommunikationsteilnehmers mit dem mindestens einen zweiten Kommunikationsteilnehmer über die bidirektionale Direktverbindung durch den ersten Kommunikationsteilnehmer, den mindestens einen zweiten Kommunikationsteilnehmer oder den ersten Kommunikationsteilnehmer und den mindestens einen zweiten Kommunikationsteilnehmer gemeinsam gesteuert wird.

Es ist denkbar, dass die erfindungsgemäß vorgesehene bidirektionale Direktverbindung, durch jeweilige Kommunikationsteilnehmer selbst gesteuert wird. Entsprechend kann vorgesehen sein, dass bspw. ein Sender seine Kommunikationsinformationen an einen jeweiligen Empfänger übermittelt und die bidirektionale Direktverbindung einrichtet. Selbstverständlich kann auch der Empfänger dem Sender seine Kommunikationsinformationen übermitteln und die bidirektionale Direktverbindung einrichten.

In einer weiteren möglichen Ausgestaltung des vorgestellten Verfahrens ist vorgesehen, dass als mindestens ein Datenpaket Daten der folgenden Liste an Daten übertragen werden: 3D Kameradaten, Radarbilder, Sensorrohdaten, Steuerbefehle zum Bewegen eines Fahrzeugs, Zugangsdaten für ein Schließsystem, Steuerbefehle für Fahrzeugkomponenten, Steuerbefehle für Komponenten einer vernetzten Infrastruktur einer Wohnung, Navigationsdaten, Updates, Konfigurationsdaten, Fernsteuerungsbefehle zum Steuern elektronischer Vorrichtungen, Kommunikationsdaten und Informationen für ein elektronisches Zahlverfahren.

Das vorgestellte Verfahren eignet sich insbesondere zum sicheren Verwalten einer Kommunikation mit individuellen Empfängern, d. h. Empfängern, die individuelle Steuerbefehle benötigen und entsprechend nicht über ein Broadcastverfahren, bei dem jeweils gleiche Daten an eine Vielzahl Empfänger übertragen werden, zu steuern sind. Weiterhin ermöglicht das vorgestellte Verfahren aufgrund der erfindungsgemäß vorgesehenen Rückmeldung im Gegensatz zu einem Broadcastverfahren eine Kenntnis eines Senders über einen Verbleib bzw. eine Verwendung jeweiliger gesendeter Daten bei einem jeweiligen Empfänger.

Insbesondere kann das vorgestellte Verfahren zum Austausch von Daten zwischen Fahrzeugen, bspw. zur Übermittlung von Steuerbefehlen zum autonomen Fahren, verwendet werden. Selbstverständlich eignet sich das vorgestellte Verfahren auch zum Steuern, d. h. zum Fernsteuern, von bspw. einer vernetzten Infrastruktur, wie bspw. einem Smart-Home bzw. einer vernetzten Struktur über das sogenannte "internet of things" oder zum Übertragen von Zahlungsinformationen bei einem elektronischen Zahlungsverfahren zum Bezahlen von bspw. einer Maut, einer Parkgebühr, einer Leihgebühr für ein Fahrzeug oder eines Dienstes zur Routenführung.

In einer weiteren möglichen Ausgestaltung des vorgestellten Verfahrens ist vorgesehen, dass als erster Kommunikationsteilnehmer ein Fahrzeug gewählt wird, das als Masterfahrzeug eines Konvois bestimmt wurde, wobei als mindestens ein Datenpaket prädikative fahrdynamische Steuerbefehle an weitere Fahrzeuge des Konvois, die als Slaves bestimmt wurden, übertragen werden.

Mittels 5G-Modulen oder 4.5G-Modulen ist es möglich, einen Seitenkanal, d. h. einen zu einem ersten Kommunikationskanal zusätzlichen zweiten Kommunikationskanal, der insbesondere eine bidirektionale Direktverbindung ist, einzurichten. Dabei können jeweilige LTE-Module von bspw. verschiedenen Smartphones untereinander über die bidirektionale Direktverbindung Daten austauschen, ohne dass eine Verbindung zwischen den Smartphones über ein Mobilfunknetzwerk bestehen muss. Entsprechend kann die erfindungsgemäß vorgesehene bidirektionale Direktverbindung auch dann zur Übermittlung von Informationen genutzt werden, wenn ein Mobilfunknetzwerk aktuell gestört ist bzw. jeweilige LTE-Module sich aktuell außerhalb einer Netzabdeckung befinden.

Selbstverständlich kann das vorgestellte Verfahren auch zur Übermittlung von Daten mittels einer Applikation, wie bspw. einer Anwendung zum Übermitteln von Zahlungsinformationen, die auf einer mobilen oder einer stationären Recheneinheit ausgeführt wird, verwendet werden. Dabei kann mittels der Applikation bspw. bestimmt werden, welche Kommunikationsteilnehmer als Sender und welche Kommunikationsteilnehmer als Empfänger wirken. Mittels einer Applikation können über die erfindungsgemäß vorgesehene bidirektionale Direktverbindung bspw. Funktionen eines Fahrzeugs oder eines Smart-Homes, wie bspw. Leuchten oder Klimageräte gesteuert werden.

Ferner betrifft die vorliegende Erfindung eine Kommunikationsanordnung mit einem ersten Kommunikationsteilnehmer und mindestens einem zweiten Kommunikationsteilnehmer, wobei der erste Kommunikationsteilnehmer dazu konfiguriert ist, mindestens ein Datenpaket zu dem mindestens einen zweiten Kommunikationsteilnehmer zumindest teilweise mittels einer zwischen jeweiligen 5G-Kommunikationsmodulen des ersten Kommunikationsteilnehmers und des zweiten Kommunikationsteilnehmers einzurichtenden bidirektionalen Direktverbindung zu übertragen, und bei dem der mindestens eine zweite Kommunikationsteilnehmer dazu konfiguriert ist, einen Empfang jeweiliger Daten des mindestens einen Datenpakets an den ersten Kommunikationsteilnehmer rückzumelden, wobei der erste Kommunikationsteilnehmer und/oder der mindestens eine zweite Kommunikationsteilnehmer ein Fahrzeug ist.

Die vorgestellte Kommunikationsanordnung dient insbesondere zur Durchführung des vorgestellten Verfahrens.

Weitere Vorteile und Ausgestaltungen ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine schematische Darstellung einer Kommunikationsanordnung zur Durchführung einer möglichen Ausgestaltung des erfindungsgemäßen Verfahrens.
Figur 2 zeigt eine weitere schematische Darstellung einer Kommunikationsanordnung zur Durchführung einer möglichen Ausgestaltung des erfindungsgemäßen Verfahrens.

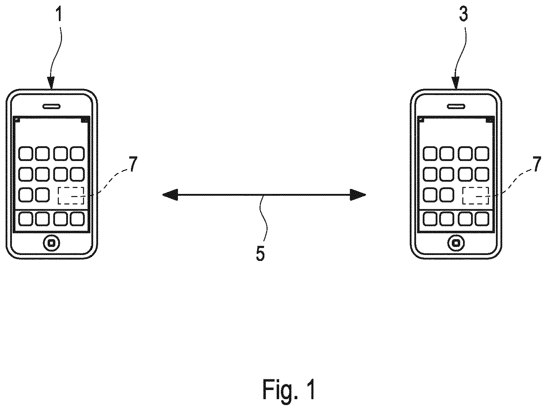

In Figur 1 ist eine Kommunikationsanordnung mit einem Sender 1 und einem Empfänger 3 dargestellt.

Der Sender 1 und der Empfänger 3 tauschen jeweils wechselseitig Daten über eine bidirektionale Direktverbindung 5 zwischen jeweiligen 5G-Modulen 7 aus. Um ein Datenpaket von dem Sender 1 zu dem Empfänger 3 sicher zu übertragen, d. h. eine Übertragung des Datenpakets von dem Sender 1 zu dem Empfänger 3 zu garantieren, überträgt der Sender 1 zunächst das Datenpaket über die bidirektionale Direktverbindung 5 an den Empfänger 3. Weiterhin übermittelt der Sender 1 an den Empfänger 3 über die bidirektionale Direktverbindung 5 eine Anfrage für eine Bestätigung eines vollständigen Empfangs des Datenpakets. Dazu übermittelt der Sender 1 dem Empfänger 3 über die bidirektionale Direktverbindung 5 Informationen über eine Größe des Datenpakets.

Sobald der Empfänger 3 das Datenpaket in der Größe, wie sie durch den Sender 1 mitgeteilt wurde, empfangen hat, übermittelt der Empfänger 3 dem Sender 1 über die bidirektionale Direktverbindung 5 eine Bestätigungsnachricht. Aufgrund der Bestätigungsnachricht, die bspw. ein Transferprotokoll über Zeit und Größe jeweiliger empfangener Daten umfassen kann, erlangt der Sender 1 Kenntnis darüber, dass das Datenpaket bei dem Empfänger 3 vollständig angekommen ist.

Weiterhin kann das Transferprotokoll Informationen darüber umfassen, ob jeweilige von dem Datenpaket umfasste Steuerbefehle in dem Empfänger 3 ausgeführt bzw. eingestellt wurden. Entsprechend erlangt der Sender 1 durch die Bestätigungsnachricht auch Kenntnis darüber, in welchem Zustand bzw. in welcher Konfiguration sich der Empfänger 3 aktuell befindet.

Aufgrund der Kenntnis des Senders 1 über den Zustand des Empfängers 3 kann der Sender 1 weitergehende Steuerbefehle generieren und in weiteren Datenpaketen an den Empfänger 3 übertragen. Dabei wird aufgrund der Bestätigungsnachricht ein Risiko vermieden, jeweilige Steuerbefehle zu übermitteln, ohne dass zuvor benötige Steuerbefehle von dem Empfänger 3 empfangen bzw. in dem Empfänger 3 eingestellt wurden.

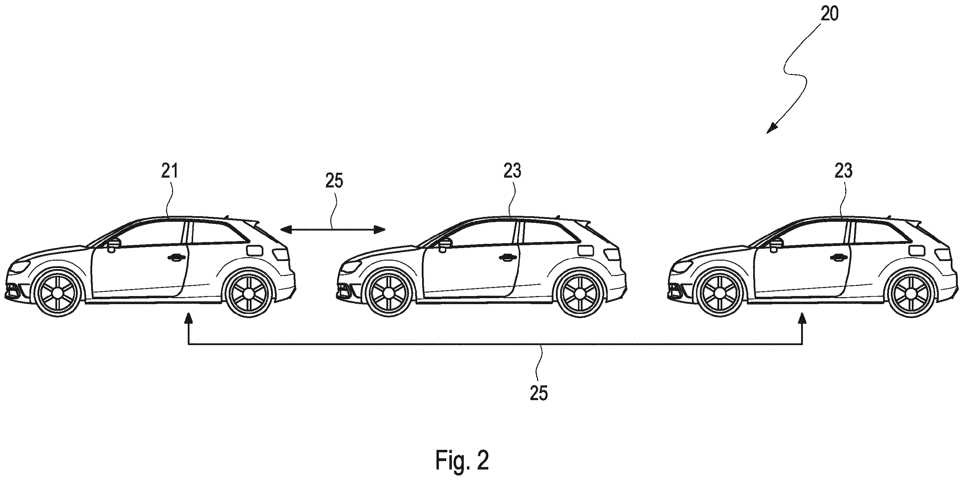

In Figur 2 ist eine Kommunikationsanordnung 20 dargestellt. Die Kommunikationsanordnung 20 umfasst ein als Master konfiguriertes Fahrzeug 21 und mehrere als Slave konfigurierte Fahrzeuge 23.

Das Fahrzeug 21 bildet mit den Fahrzeugen 23 eine Kolonne. Um die Fahrzeuge 23 so zu steuern, dass diese mit möglichst geringem Abstand zueinander fahren und einen Windschatten eines jeweiligen vorausfahrenden Fahrzeugs ausnutzen, überträgt das Fahrzeug 21 prädikative fahrdynamische Steuerbefehle, wie bspw. Brems- oder Steuerbefehle und Streckeninformationen an die Fahrzeuge 23. Dazu verbindet sich das Fahrzeug 21 über jeweilige bidirektionale Direktverbindungen 25 mit den Fahrzeugen 23 und überträgt entsprechende Datenpakete, die die Brems- oder Steuerbefehle und Streckeninformationen umfassen, an die Fahrzeuge 23.

Sobald ein jeweiliges Fahrzeug 23 jeweilige Brems- oder Steuerbefehle und Streckeninformationen über eine jeweilige bidirektionale Direktverbindung 25 empfangen und eingestellt hat, übermittelt das Fahrzeug 23 über die jeweilige bidirektionale Direktverbindung 25 eine jeweilige Bestätigungsnachricht an das Fahrzeug 21, so dass das Fahrzeug 21 Kenntnis über einen Konfigurationszustand des Fahrzeugs 23 erlangt. In Abhängigkeit des Konfigurationszustands des Fahrzeugs 23 generiert das Fahrzeug 21 weitere Steuerbefehle und übermittelt diese an das Fahrzeug 23.

## Patentansprüche

1. Verfahren zum Übertragen mindestens eines Datenpakets zwischen einem ersten Kommunikationsteilnehmer einer Kommunikationsanordnung und mindestens einem zweiten Kommunikationsteilnehmer der Kommunikationsanordnung, bei dem das mindestens eine Datenpaket von dem ersten Kommunikationsteilnehmer zu dem mindestens einen zweiten Kommunikationsteilnehmer zumindest teilweise über eine zwischen einem Kommunikationsmodul des ersten Kommunikationsteilnehmers und einem Kommunikationsmodul des mindestens einen zweiten Kommunikationsteilnehmers aufgebaute bidirektionale Direktverbindung, d.h. eine Verbindung über einen Seitenkanal, über den zwischen den 5G-Kommunikationsmodulen Daten ausgetauscht werden können, ohne dass eine Verbindung über ein Mobilfunknetzwerk bestehen muss, übertragen wird, wobei der erste Kommunikationsteilnehmer ein Fahrzeug ist und der mindestens eine zweite Kommunikationsteilnehmer Teil einer vernetzten Infrastruktur ist, die eine vernetzte Infrastruktur einer Wohnung ist und die Kommunikation zum Steuern bzw. Fernsteuern der vernetzten Infrastruktur der Wohnung dient, und bei dem der mindestens eine zweite Kommunikationsteilnehmer einen Empfang jeweiliger Daten des mindestens einen Datenpakets an den ersten Kommunikationsteilnehmer rückmeldet, **dadurch gekennzeichnet, dass** ein Teil des mindestens einen Datenpakets über die zwischen den Kommunikationsteilnehmern aufgebaute bidirektionale Direktverbindung und ein weiterer Teil des mindestens einen Datenpakets über ein Mobilfunknetzwerk übertragen wird, wobei über das Mobilfunknetzwerk ein zu übertragende Informationen umfassender Teil des Datenpakets und über die bidirektionale Direktverbindung ein Transferprotokoll über jeweilige übertragene Daten übertragen wird.

2. Verfahren nach Anspruch 1, bei dem als das mindestens eine Datenpaket Steuerbefehle für Komponenten einer vernetzten Infrastruktur einer Wohnung übertragen werden.

3. Verfahren nach Anspruch 2, bei dem als das mindestens eine Datenpaket Fernsteuerungsbefehle zum Steuern elektronischer Vorrichtungen übertragen werden.

4. Kommunikationsanordnung mit einem ersten Kommunikationsteilnehmer (1, 21) und mindestens einem zweiten Kommunikationsteilnehmer (3, 23), wobei der erste Kommunikationsteilnehmer (1, 21) dazu konfiguriert ist, mindestens ein Datenpaket zu dem mindestens einen zweiten Kommunikationsteilnehmer (3, 23) zumindest teilweise mittels einer zwischen jeweiligen 5G-Kommunikationsmodulen des ersten Kommunikationsteilnehmers (1, 21) und des zweiten Kommunikationsteilnehmers (3, 23) einzurichtenden bidirektionalen Direktverbindung, d.h. einer Verbindung über einen Seitenkanal, über den zwischen den 5G-Kommunikationsmodulen Daten ausgetauscht werden können, ohne dass eine Verbindung über ein Mobilfunknetzwerk bestehen muss, zu übertragen, und bei dem der mindestens eine zweite Kommunikationsteilnehmer (7, 23) dazu konfiguriert ist, einen Empfang jeweiliger Daten des mindestens einen Datenpakets an den ersten Kommunikationsteilnehmer (1, 21) rückzumelden, wobei der erste Kommunikationsteilnehmer (1, 21) ein Fahrzeug ist und der mindestens eine zweite Kommunikationsteilnehmer (3, 23) Teil einer vernetzten Infrastruktur ist, welche eine vernetzte Infrastruktur einer Wohnung ist und die Kommunikation zum Steuern bzw. Fernsteuern der vernetzten Infrastruktur der Wohnung dient, und wobei die Kommunikationsanordnung dazu konfiguriert ist, einen Teil des mindestens einen Datenpakets über die zwischen den Kommunikationsteilnehmern aufgebaute bidirektionale Direktverbindung und einen weiteren Teil des mindestens einen Datenpakets über ein Mobilfunknetzwerk zu übertragen und, dazu konfiguriert ist, einen zu übertragende Informationen umfassenden Teil des Datenpakets über das Mobilfunknetzwerk und ein Transferprotokoll über jeweilige übertragene Daten über die bidirektionale Direktverbindung zu übertragen.

5. Kommunikationsanordnung nach Anspruch 4, worin die vernetzte Infrastruktur der Wohnung ein Smart-Home ist.

6. Kommunikationsanordnung nach Anspruch 4 oder 5, worin die vernetzte Infrastruktur der Wohnung elektronische Vorrichtungen wie Leuchten oder Klimageräte umfasst, die dafür eingerichtet sind, durch die Kommunikation gesteuert bzw. ferngesteuert zu werden.

## Claims

1. Method for transmitting at least one data packet between a first communication subscriber or a communication arrangement and at least one second communication subscriber of the communication arrangement, in the case of which the at least one data packet is transmitted from the first communication subscriber to the at least one second communication subscriber at least partially via a bidirectional data connection established between a communication module of the first communication subscriber and a communication module of the at least one second communication subscriber, i.e. a connection via a side channel via which data can be exchanged between the 5G communication modules without a connection via a mobile radio network needing to exist, wherein the first communication subscriber is a vehicle and the at least one second communication subscriber is part of a networked infrastructure which is a networked infrastructure of a dwelling and the communication serves for controlling or remotely controlling the network infrastructure of the dwelling, and in the case of which the at least one second communication subscriber reports a reception of respective data of the at least one data packet to the first communication subscriber, **characterised in that** a part of the at least one data packet is transmitted via the bidirectional direct connection established between the communication subscribers and a further part of the at least one data packet is transmitted via a mobile radio network, wherein via the mobile radio network a part of the data packet is transmitted which comprises items of information to be transmitted, and via the bidirectional data connection a transfer protocol is transmitted regarding respective transmitted data.

2. Method according to claim 1, in which control commands for components of a networked infrastructure of a dwelling are transmitted as the at least one data packet.

3. Method according to claim 2, in which remote control commands for controlling electronic devices are transmitted as the at least one data packet.

4. Communication arrangement having a first communication subscriber (1, 21) and at least one second communication subscriber (3, 23), wherein the first communication subscriber (1, 21) is configured to transmit at least one data packet to the at least one second communication subscriber (3, 23) at least partially by means of a bidirectional direct connection which is to be established between respective 5G communication modules of the first communication subscriber (1, 21) and of the second communication subscriber (3, 23), i.e. a connection via a side channel, via which data can be exchanged between the 5G communication modules without a connection via a mobile radio network needing to exist, and in the case of which the at least one second communication subscriber (7, 23) is configured to report a reception of respective data of the at least one data packet to the first communication subscriber (1, 21), wherein the first communication subscriber (1, 21) is a vehicle and the at least one second communication subscriber (3, 23) is part of a networked infrastructure which is a networked infrastructureof a dwelling and the communication serves for controlling or remotely controlling the networked infrastructure of the dwelling, and wherein the communication arrangement is configured to transmit a part of the at least one data packet via the bidirectional data connection established between the communication subscribers and a further part of the at least one data packet via a mobile radio network and is configured to transmit a part of the data packet comprising items of information to be transmitted via the mobile radio network and to transmit a transfer protocol regarding respective submitted data via the bidirectional direct connection.

5. Communication arrangement according to claim 4, in which the networked infrastructure of the dwelling is a smart home.

6. Communication arrangement according to claim 4 or 5, in which the networked infrastructure of the dwelling comprises electronic devices such as lamps or air-conditioning devices which are configured to be controlled or remotely controlled by means of the communication.

## Revendications

1. Procédé de transmission d'au moins un paquet de données entre un premier participant de communication d'un agencement de communication et au moins un second participant de communication de l'agencement de communication, pour lequel l'au moins un paquet de données est transmis du premier participant de communication à l'au moins un second participant de communication au moins partiellement par le biais d'une liaison directe bidirectionnelle établie entre un module de communication du premier participant de communication et un module de communication d'au moins un second participant de communication, c'est-à-dire une liaison par le biais d'un canal latéral, par lequel des données peuvent être échangées entre les modules de communication 5G sans qu'une liaison par le biais d'un réseau radio mobile ne puisse exister, dans lequel le premier participant de communication est un véhicule et l'au moins un second participant de communication fait partie d'une infrastructure interconnectée qui est une infrastructure interconnectée d'un logement et la communication sert à la commande ou la télécommande de l'infrastructure interconnectée du logement, et pour lequel l'au moins un second participant de communication rapporte une réception de données respectives d'au moins un paquet de données au premier participant de communication, **caractérisé en ce qu'**une partie d'au moins un paquet de données est transmise par le biais de la liaison directe bdirectionnelle établie entre les participants de communication et une autre partie d'au moins un paquet de données est transmise par le biais d'un réseau radio mobile, dans lequel par le biais du réseau radio mobile, une partie comprenant des informations à transmettre du paquet de données et par le biais de la liaison directe bidirectionnelle un protocole de transfert sont transmis par le biais des données transmises respectives.

2. Procédé selon la revendication 1, pour lequel comme l'au moins un paquet de données, des ordres de commande pour des composants sont transmis à une infrastructure interconnectée d'un logement.

3. Procédé selon la revendication 2, pour lequel comme l'au moins un paquet de données, des ordres de télécommande sont transmis pour la commande de dispositifs électroniques.

4. Agencement de communication avec un premier participant de communication (1, 21) et au moins un second participant de communication (3, 23), dans lequel le premier participant de communication (1, 21) est configuré afin de transmettre au moins un paquet de données à l'au moins un second participant de communication (3, 23) au moins partiellement au moyen d'une liaison directe bidirectionnelle à établir entre des modules de communication 5G respectifs du premier participant de communication (1, 21) et du second participant de communication (3, 23), c'est-à-dire une liaison par le biais d'un canal latéral, par lequel des données peuvent être échangées entre les modules de communication 5G sans qu'une liaison par le biais d'un réseau radio mobile ne puisse exister, et pour lequel l'au moins un second participant de communication (3, 23) est configuré afin de rapporter une réception des données respectives d'au moins un paquet de données au premier participant de communication (1, 21), dans lequel le premier participant de communication (1, 21) est un véhicule et l'au moins un second participant de communication (3, 23) fait partie d'une infrastructure interconnectée qui est une infrastructure interconnectée d'un logement et la communication sert à la commande ou la télécommande de l'infrastrusture interconnectée du logement, et dans lequel l'agencement de communication est configuré afin de transmettre une partie d'au moins un paquet de données par le biais de la liaison directe bidirectionnelle établie entre les participiants de communiction et une autre partie d'au moins un paquet de données par le biais d'un réseau radio mobile et, est configuré afin de transmettre une partie comprenant des informations à transmettre du paquet de données par le biais du réseau radio mobile et un protocole de transfert par le biais de données transmises respectives par le biais de la liaison directe.

5. Agencement de communication selon la revendication 4, dans lequel l'infrastructure interconnectée du logement est une smart-home.

6. Agencement de communication selon la revendication 4 ou 5, dans lequel l'infrastructure interconnectée du logement comporte des dispositifs électroniques tels que des lampes ou climatisations qui sont conçus afin d'être commandés ou télécommandés par la communication.
